# EUROPÄISCHE PATENTSCHRIFT

(11) **EP 2 768 289 B1**
(45) Veröffentlichungstag und Bekanntmachung des Hinweises auf die Patenterteilung: **04.04.2018**
(21) Anmeldenummer: 13155648.2
(22) Anmeldetag: 18.02.2013
(51) Int. Cl.: G01N 23/083, H05G 1/06, H01J 35/14

(54) **Personentransportable Röntgenvorrichtung**
Portable x-ray device
Dispositif à rayons X portatif

(43) Veröffentlichungstag der Anmeldung: 20.08.2014
(73) Patentinhaber: Airbus Defence and Space GmbH, 82024 Taufkirchen (DE)
(72) Erfinder: Stenzel, Christian, 88048 Friedrichshafen (DE); Mitschke, Denis, 88677 Markdorf (DE); Gruhl, Thomas, 30974 Wennigsen (DE); Daneke, Norbert, 28844 Weyhe (DE)
(74) Vertreter: Daub, Thomas

(56) Entgegenhaltungen:
- WO-A1-2006/101468
- WO-A2-2006/105332
- US-A- 3 752 990
- US-A- 5 077 771
- US-A1- 2005 129 174
- US-A1- 2010 226 476
- US-B2- 6 661 876

## Beschreibung

### Stand der Technik

Die Erfindung betrifft eine personentransportable Röntgenvorrichtung. Bei Röntgenvorrichtungen nach dem gegenwärtigen Stand der Technik, die zu einer Erzeugung eines Röntgenstrahls für eine Durchleuchtung eines Objekts im Zuge einer Untersuchung vorgesehen sind, ist die Hochspannungsversorgungseinheit, die eine Hochspannung für einen Betrieb einer Röntgenröhre bereitstellt, aufgrund ihres hohen Gewichts und ihrer Größe stationär eingebaut und mit der Röntgenröhre über Stromkabel mit einem hohen Durchmesser verbunden. Meist ist die Röntgenröhre ebenfalls stationär angeordnet und allenfalls schwenkbar ausgebildet, sodass Untersuchungsobjekte zu der Röntgenvorrichtung transportiert werden müssen. Insbesondere bei großen Untersuchungsobjekten oder Untersuchungsobjekten, die einen integralen Bestandteil eines Objekts bilden und nur schwer oder gar nicht demontiert werden können, ist somit eine Untersuchung mittels Röntgenstrahlung nur schwer möglich. Es besteht somit ein Bedarf an einer kompakten, personentransportablen Röntgenvorrichtung, die insbesondere eine transportable Hochspannungsversorgungseinheit umfasst und somit zu Untersuchungsobjekten transportiert werden kann.

Personentransportable Röntgenvorrichtungen sind aus WO 2006/101468, US 2005/0129174 und US 2010/0226476 bekannt. Die Aufgabe der Erfindung besteht insbesondere darin, eine Röntgenvorrichtung mit verbesserten Eigenschaften hinsichtlich einer Transportabilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Röntgenvorrichtung mit zumindest einer Hochspannungsversorgungseinheit, zumindest einer Röntgenstrahlungseinheit zur Erzeugung eines Röntgenstrahls, zumindest einer Fokussierungseinheit zu einer Fokussierung des Röntgenstrahls, und mit zumindest einer Röntgendetektionseinheit.

Es wird vorgeschlagen, dass die Röntgenvorrichtung ein personentransportables Strahlungsmodul aufweist, das die zumindest eine Hochspannungsversorgungseinheit zusammen mit der zumindest einen Röntgenstrahlungseinheit umfasst.

Unter einer "Röntgenvorrichtung" soll insbesondere eine Vorrichtung verstanden werden, die Röntgenstrahlung zumindest erzeugt und vorzugsweise die Röntgenstrahlung in einer vorher festgelegt Strahlenform für eine Nutzung, beispielsweise für eine Untersuchung eines Untersuchungsobjekts, zur Verfügung stellt. Insbesondere weist die Röntgenvorrichtung zu einer Erzeugung von Röntgenstrahlung zumindest eine Röntgenröhre auf. Unter "Röntgenstrahlung" soll insbesondere eine Photonenstrahlung mit einer Wellenlänge zwischen etwa zehn Nanometern und einem Pikometer verstanden werden. Unter einer "Röntgenröhre" soll insbesondere eine Einheit verstanden werden, in der durch eine Hochspannung Elektronen, die aus einer Kathode austreten, auf eine Röntgenanode beschleunigt werden, und bei einem Auftreffen auf ein Anodenmaterial der Röntgenanode zum Einen durch elektromagnetische Wechselwirkung mit Atomen in dem Anodenmaterial abgebremst werden und Röntgenstrahlung in Form von Bremsstrahlung erzeugt, zum Anderen innere Hüllenelektronen aus Atomhüllen der Atome des Anodenmaterials herausschlagen, wobei ein dabei entstehendes Loch in der Atomhülle unter Aussendung eines Photons an Röntgenstrahlung, die als charakteristische Röntgenstrahlung bezeichnet wird, von äußeren Hüllenelektronen aufgefüllt wird, und zum Anderen durch eine als Lilienfeldstrahlung bezeichnete Übergangsstrahlung bei einem Grenzflächenübergang der beschleunigten Elektronen zwischen Materialien mit unterschiedlicher Permittivität Röntgenstrahlung erzeugt wird. Unter einer "Hochspannungsversorgungseinheit" soll insbesondere eine Einheit verstanden werden, die durch Hochtransformation einer Eingangsspannung von maximal 100 V, vorteilhaft maximal 60 V und bevorzugt maximal 40 V eine Hochspannung, insbesondere eine Hochspannung zu einer Beschleunigung von Elektronen, von zumindest 80 kV, vorteilhaft von zumindest 90 kV und bevorzugt von zumindest 100 kV erzeugt. Moderne Hochspannungsversorgungseinheiten nach dem Stand der Technik weisen zumindest ein Gewicht von 60 kg und einen Rauminhalt von zumindest 0,4 m³ auf und können somit lediglich stationär betrieben werden. Insbesondere sind die Hochspannungsversorgungseinheiten nach dem Stand der Technik zu groß und zu schwer, um zusammen mit einer Röntgenstrahlungseinheit in einem personentransportablen Modul zusammengefasst zu werden. Unter einer "Fokussierungseinheit zu einer Fokussierung des Röntgenstrahls" soll insbesondere eine Einheit mit Permanent- und/oder Elektromagneten verstanden werden, die dazu vorgesehen ist, einen Strahl beschleunigter Elektronen auf einen vorbestimmten Bereich zu fokussieren, um einen fokussierten Strahl von Röntgenstrahlung an der Röntgenanode zu erzeugen. Vorzugsweise ist die Fokussierungseinheit dazu ausgebildet, die Elektroden in einen sogenannten Mikrofokus mit einem Brennfleck von maximal 10 µm, vorteilhaft maximal 8 µm und bevorzugt maximal 4 µm zu fokussieren. Unter einer "Röntgendetektionseinheit" soll insbesondere eine Einheit zu einer Detektion von Röntgenstrahlung, die insbesondere eine Detektion einer auftreffenden Strahlenmenge an Röntgenstrahlung und eine Ortsauflösung erlaubt, beispielsweise Szintillatorschirme, Gasionisationsdetektoren oder Halbleiterdetektoren. Unter einem "Modul" soll insbesondere eine abgeschlossene Einheit aus mehreren Teileinheiten verstanden werden, die zu einem Zusammenwirken mit anderen Einheiten und vorzugweise zu einer Verbindung mit anderen Einheiten vorgesehen ist. Vorzugsweise weist das Modul ein Modulgehäuse auf, das die Teileinheiten im Gesamten umgibt. Unter einem "personentransportablen Modul" soll insbesondere ein Modul verstanden werden, dass von maximal drei Personen, vorteilhaft von maximal zwei Personen und bevorzugt von einer Person mit Händen über eine Strecke von zumindest zwanzig Metern, vorteilhaft zumindest fünfzig Metern und vorzugsweise zumindest einhundert Metern transportiert werden kann. Insbesondere weist das personentransportable Modul einen Rauminhalt von maximal 0,15 m³ und ein Gewicht von maximal 90 kg auf. Es kann insbesondere eine flexibel einsetzbare Röntgenvorrichtung erreicht werden, mit der auch unter beengten Verhältnissen Untersuchungen vorgenommen werden können.

In einer Weiterbildung der Erfindung wird vorgeschlagen, dass das Strahlungsmodul einen Rauminhalt von maximal 0,032 m³, vorteilhaft von maximal 0,025 m³ und bevorzugt von maximal 0,016 m³ aufweist. Es kann insbesondere ein von einer einzelnen Person personentransportables Modul erreicht werden.

Weiterhin wird vorgeschlagen, dass das Strahlungsmodul ein Gewicht von maximal 50 kg, vorteilhaft maximal 40 kg und bevorzugt maximal 30 kg aufweist. Es kann insbesondere ein von einer einzelnen Person personentransportables Strahlungsmodul erreicht werden

Ferner wird vorgeschlagen, dass das Strahlungsmodul die zumindest eine Fokussierungseinheit umfasst. Es kann insbesondere ein Strahlungsmodul zur Verfügung gestellt werden, das einen fokussierten Röntgenstrahl und somit einen komplett zu einer Verwendung vorbehandelten Röntgenstrahl zur Verfügung stellt.

Es wird weiterhin vorgeschlagen, dass die Röntgenvorrichtung ein personentransportables Detektionsmodul umfasst, das die zumindest eine Röntgendetektionseinheit aufweist. Vorzugsweise ist das Detektionsmodul zu einer Verbindung mit dem Strahlungsmodul vorgesehen. Es kann insbesondere eine einfach transportable Röntgenvorrichtung erreicht werden.

In einer Weiterbildung der Erfindung wird vorgeschlagen, dass das Detektionsmodul zumindest einen Verbindungsbereich aufweist, der zu einer Verbindung mit dem Strahlungsmodul und/oder einer Probenkammer vorgesehen ist. Unter einem "Verbindungsbereich" soll insbesondere ein speziell zu einer Verbindung vorgesehener Bereich verstanden werden, der zumindest einen Kontaktbereich aufweist, der zu einem passgenauen Kontakt zu einem Teilbereich des Strahlungsmoduls vorgesehen ist und der vorzugsweise Befestigungsmittel zu einer Befestigung des Detektionsmoduls an dem Strahlungsmodul aufweist. Es kann insbesondere eine besonders robust ausgeführte Röntgenvorrichtung und eine weitgehend störungsfreie Detektion von durch das Strahlungsmodul ausgesandter Röntgenstrahlung erreicht werden.

Des Weiteren wird vorgeschlagen, dass die Röntgenvorrichtung zumindest eine Probenkammer zu einer Aufnahme eines Untersuchungsobjekts umfasst. Unter einer "Probenkammer" soll insbesondere eine Einheit mit einem freien Raum, in die ein Untersuchungsobjekt als eine Probe eingebracht werden kann, verstanden werden. Insbesondere weist die Probenkammer Arretierungselemente zu einer Befestigung der Probe auf. Vorteilhaft kann mittels der Arretierungselemente ein Abstand der Probe von einem Eintrittspunkt der Röntgenstrahlung in die Probenkammer und somit eine erzielte Vergrößerung einer Abbildung durch Röntgenstrahlung variiert werden. Es kann insbesondere eine Röntgenvorrichtung erreicht werden, die eine vorteilhaft störungsfreie Untersuchung einer Probe und eine variable Vergrößerung ermöglicht.

Ferner wird vorgeschlagen, dass die Röntgenvorrichtung zumindest eine Dichtungseinheit aufweist, die dazu vorgesehen ist, eine Verbindung zwischen dem Strahlungsmodul und/oder dem Detektionsmodul und/oder der Probenkammer abzudichten. Insbesondere kann die Dichtungseinheit beispielsweise als eine Einheit mit zumindest einem O-Ring ausgebildet sein. Es kann insbesondere eine weitgehend von Störungseinflüssen abgeschirmte Verbindung von dem Strahlungsmodul und/oder dem Detektionsmodul und/oder der Probenkammer erreicht und Röntgenuntersuchungen unter Vakuumbedingungen ermöglicht werden.

Es wird ein Röntgenuntersuchungsverfahren mit einer erfindungsgemäßen Röntgenvorrichtung vorgeschlagen, bei dem die Röntgenvorrichtung zu einer Objektuntersuchung von zumindest einem ersten Untersuchungsobjekt in einen ersten Untersuchungsbereich transportiert und zu einer Objektuntersuchung von zumindest einem zweiten Untersuchungsobjekt in einen zweiten Untersuchungsbereich transportiert wird. Unter einem "Untersuchungsbereich" soll insbesondere ein Bereich, vorzugsweise ein Raum verstanden werden, in dem das zumindest eine Objekt angeordnet ist und der insbesondere verschieden ist von einem speziell als Röntgenbereich ausgebildeten Bereich mit einer fest installierten Röntgenröhre und einer fest installierten Hochspannungsversorgung, in den Untersuchungsobjekte zu einer Objektuntersuchung transportiert werden. Es kann insbesondere ein Röntgenuntersuchungsverfahren mit einer hohen Flexibilität in einem Einsatz der Röntgenvorrichtung und besonders mit geringen Anforderungen an Räumlichkeiten zu einer Durchführung einer Objektuntersuchung erreicht werden.

In einer Weiterbildung der Erfindung wird vorgeschlagen, dass das Strahlungsmodul der Röntgenvorrichtung zu einer Untersuchung eines Untersuchungsobjekts an oder unmittelbar vor einem Teilbereich des Untersuchungsobjekts und das Detektionsmodul an oder unmittelbar vor einem weiteren Teilbereich des Untersuchungsobjekts angeordnet werden. Insbesondere kann in zumindest einem Betriebszustand das Detektionsmodul von der Probenkammer und/oder dem Strahlungsmodul abgetrennt werden, um zumindest ein Untersuchungsobjekt in einem Zwischenraum zwischen dem Strahlungsmodul und dem Detektionsmodul zu durchstrahlen. Es kann insbesondere eine Untersuchung mittels Röntgenstrahlung von Objekten, die für eine Einbringung in die zumindest einen Probenkammer zu groß sind, und/oder von Teilkomponenten eines Bauteils, dass für die Einbringung zu groß ist, ohne eine Notwendigkeit einer Zerlegung der größeren Einheit erreicht werden. Insbesondere Teilkomponenten von Bauteilen, welche bei einem Ausbau aus dem Bauteil beschädigt werden könnten, können somit besonders einfach untersucht werden.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Röntgenvorrichtung mit einem Strahlungsmodul und einem Detektionsmodul mit integrierter Probenkammer,
- Fig. 2: eine schematische Darstellung einer alternativen erfindungsgemäßen Röntgenvorrichtung mit einem Strahlungsmodul, einem Detektionsmodul und mit einer Probenkammer, in der zu einer Objektuntersuchung eine Probe montiert ist, und
- Fig. 3: eine schematische Darstellung der alternativen erfindungsgemäßen Röntgenvorrichtung mit dem Strahlungsmodul und dem Detektionsmodul, die voneinander getrennt an unterschiedlichen Teilbereichen eines Untersuchungsobjekts angeordnet sind.

### Beschreibung der Ausführungsbeispiele

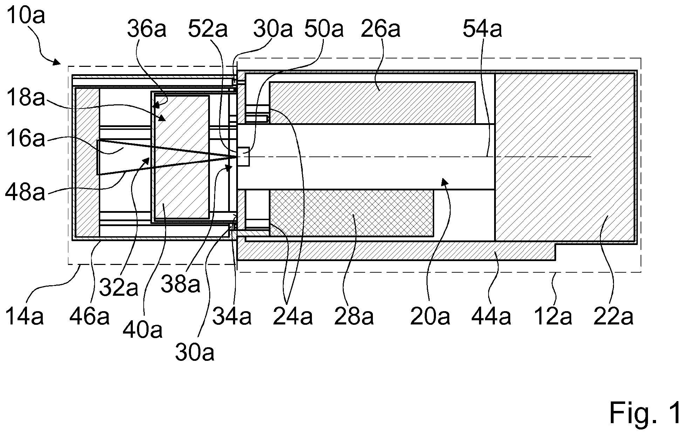

Fig. 1 zeigt eine erfindungsgemäße Röntgenvorrichtung 10a mit einer Hochspannungsversorgungseinheit 22a, einer Röntgenstrahlungseinheit 20a zur Erzeugung eines Röntgenstrahls 48a, einer Fokussierungseinheit 24a zu einer Fokussierung des Röntgenstrahls 48a, einer Turbomolekularpumpe 28a, einer Stromversorgungseinheit 26a für die Fokussierungseinheit 24a und mit einer Röntgendetektionseinheit 16a und einer Probenkammer 18a. Die Hochspannungsversorgungseinheit 22a transformiert eine Eingangsspannung von 40 V, die über nicht dargestellte Stromversorgungsleitungen der Röntgenvorrichtung 10a zugeführt wird, bei einer maximalen Stromstärke von 6 A in eine Hochspannung von 100 kV. In der Röntgenstrahlungseinheit 20a werden in einem Betrieb mittels eines glühelektrischen Effekts Elektronen aus einer als ein heizbarer Draht ausgebildeten Kathode freigesetzt und von der Hochspannung der Hochspannungsversorgungseinheit 22a in einem Elektronenstrahl 54a auf eine Röntgenanode 50a zu beschleunigt. Bei einem Auftreffen beschleunigter Elektronen des Elektronenstrahls 54a auf die Röntgenanode 50a wird Röntgenstrahlung durch Bremsstrahlung, charakteristische Röntgenstrahlung und Lilienfeldstrahlung erzeugt. Die Röntgenstrahlung 48a tritt durch ein Aluminiumfenster 52a aus. Die als Elektronenoptik ausgebildete Fokussierungseinheit 24a weist Elektromagnete auf, die über die Stromversorgungseinheit 26a mit Strom zur Erzeugung eines Magnetfelds versorgt werden, mittels dem der Elektronenstrahl 54a auf einen Brennfleck mit einem Durchmesser von 4 µm in der Röntgenanode 50a fokussiert wird. Die Turbomolekularpumpe 28a erzeugt ein Hochvakuum in einem Bereich des Strahlungsmoduls 12a, in dem der Elektronenstrahl 54a verläuft, um eine Aufweitung des Elektronenstrahls 54a zu vermeiden. Eine nicht dargestellte, externe Vorvakuumpumpe wird zusätzlich zu der Turbomolekularpumpe 28a verwendet.

Die Röntgenvorrichtung 10a umfasst ein personentransportables Strahlungsmodul 12a, das die Hochspannungsversorgungseinheit 22a zusammen mit der Röntgenstrahlungseinheit 20a, der Fokussierungseinheit 24a, der Turbomolekularpumpe 28a und der Stromversorgungseinheit 26a umfasst und innerhalb eines Modulgehäuses 44a befestigt. Das Strahlungsmodul 12a weist einen Rauminhalt von 0,1575 m³ und ein Gewicht von 35 kg auf. Die Röntgenvorrichtung 10a umfasst ferner ein personentransportables Detektionsmodul 14a, das die Röntgendetektionseinheit 16a aufweist. Die Röntgendetektionseinheit 16a umfasst einen Szintillatorschirm, eine Photodetektionseinheit zu Detektion von Szintillatorlicht und eine Auswerteeinheit zu einer elektronischen Auswertung. Das Detektionsmodul 14a weist ein Modulgehäuse 46a auf, dass die Röntgendetektionseinheit 16a und eine Probenkammer 18a zu einer Aufnahme eines Untersuchungsobjekts 40a, die in das Detektionsmodul 14a integriert ist, auf. Des Weiteren ist in das Detektionsmodul 14a eine USB-Schnittstelle zu einer Weiterleitung der Daten der Röntgendetektionseinheit 16a integriert. In der Probenkammer 18a ist ein Untersuchungsobjekt 40a mittels Arretierungsmitteln befestigt, wobei ein Abstand des Untersuchungsobjekts 40a zu dem Aluminiumfenster 52a und somit einem Ausgangspunkt des Röntgenstrahls 48a variiert werden kann, wodurch eine erzielbare Auflösung variiert werden kann. In der Probenkammer 18a können Untersuchungsobjekte 40a mit einem Maximaldurchmesser von 175 mm und einer Maximallänge von 95 mm montiert werden. Die Modulgehäuse 44a, 46a des Strahlungsmoduls 12a und des Detektionsmoduls 14a schützen eine Umgebung der Röntgenvorrichtung 10a gegenüber einem Austritt von Röntgenstrahlung.

Das Detektionsmodul 14a weist einen Verbindungsbereich 32a auf, der zu einer Verbindung des Detektionsmoduls 14a mit dem Strahlungsmodul 12a vorgesehen ist und an dem das Detektionsmodul 14a mit einem korrespondierenden Verbindungsbereich 34a des Strahlungsmoduls 12a verbunden ist. Die Verbindung des Detektionsmoduls 14a mit dem Strahlungsmodul 12a wird mittels nicht dargestellter Befestigungsmittel der Verbindungsbereiche 32a, 34a bewirkt. Die Probenkammer 18a weist einen Verbindungsbereich 36a zu einer Verbindung mit dem Detektionsmodul 14a und einen Verbindungsbereich 38a zu einer Verbindung mit dem Strahlungsmodul 12a auf. Der Verbindungsbereich 38a ist mit dem korrespondierenden Verbindungsbereich 34a des Strahlungsmoduls 12a verbunden. Die Röntgenvorrichtung 10a umfasst eine Dichtungseinheit 30a, die als eine O-Ring-Dichtung ausgeführt ist und eine Verbindung zwischen dem Strahlungsmodul 12a und dem Detektionsmodul 14a und der Probenkammer 18a abdichtet. Eine Gesamtlänge der Röntgenvorrichtung 10a beträgt 687 mm und ein Gesamtgewicht 43 kg.

In einem Röntgenuntersuchungsverfahren mit der Röntgenvorrichtung 10a wird die Röntgenvorrichtung 10a zu einer Objektuntersuchung von zumindest einem ersten Untersuchungsobjekt 40a in einen ersten Untersuchungsbereich transportiert und zu einer Objektuntersuchung von zumindest einem zweiten Untersuchungsobjekt in einen zweiten Untersuchungsbereich transportiert. Ein Transport der Röntgenvorrichtung 10a wird durch eine Ausbildung des Strahlungsmoduls 12a und des Detektionsmoduls 14a als personentransportable Module ermöglicht. Durch das Röntgenuntersuchungsverfahren mit einem Transport der Röntgenvorrichtung 10a wird es vermieden, einen separaten Röntgenbereich mit einer fest installierten Röntgenquelle aufbauen zu müssen. Das Strahlungsmodul 12a und das Detektionsmodul 14a können zu einem erleichterten Transport voneinander getrennt werden. Mittels einer Trennung des Strahlungsmoduls 12a und des Detektionsmoduls 14a können ferner Objekte, die für eine Aufnahme in der Probenkammer 18a zu groß sind, durch Anordnung des Strahlungsmoduls 12a und des Detektionsmoduls 14a auf unterschiedlichen Seiten des Objekts und anschließenden Betrieb der Röntgenvorrichtung 10a untersucht werden.

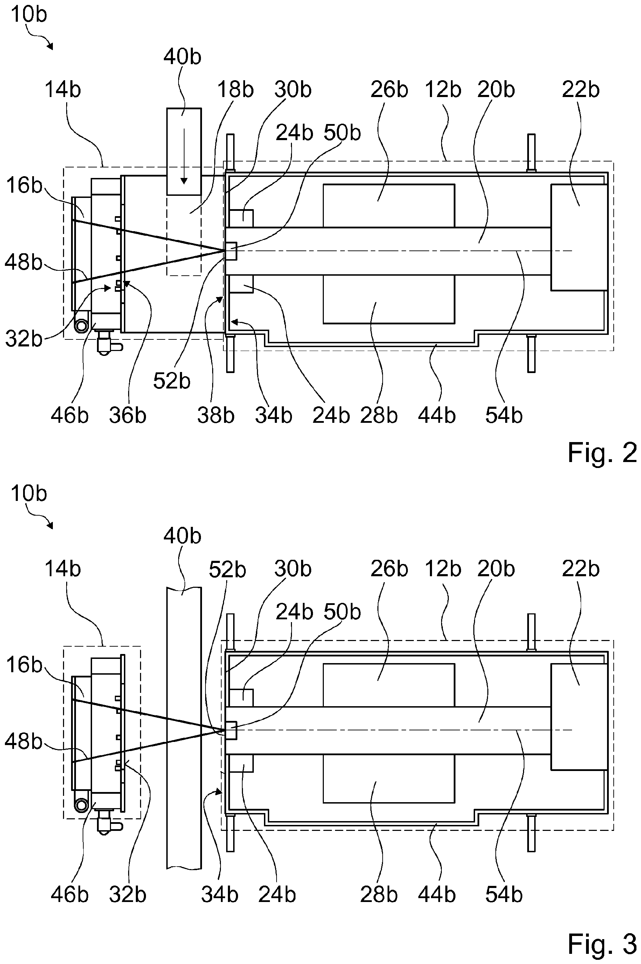

In Fig. 2 und Fig. 3 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung des anderen Ausführungsbeispiels, insbesondere der Fig. 1, verwiesen wird. Zur Unterscheidung der Ausführungsbeispiele ist der Buchstabe a den Bezugszeichen des Ausführungsbeispiels der Fig. 1 nachgestellt. In dem Ausführungsbeispiel in Fig. 2 und Fig. 3 ist der Buchstabe a durch den Buchstaben b ersetzt.

Eine alternative Röntgenvorrichtung 10b ist im Wesentlichen analog zu der im vorherigen Ausführungsbeispiel dargestellten und umfasst ein personentransportables Strahlungsmodul 12b, das eine Hochspannungsversorgungseinheit 22b zusammen mit einer Röntgenstrahlungseinheit 20b, einer Fokussierungseinheit 24b, einer Turbomolekularpumpe 28b und einer Stromversorgungseinheit 26b umfasst und innerhalb eines Modulgehäuses 44b befestigt ist (Fig. 2). Das personentransportable Strahlungsmodul 12b weist einen Rauminhalt von 0,1575 m³ und ein Gewicht von 35 kg auf. Die Röntgenvorrichtung 10b umfasst ferner ein personentransportables Detektionsmodul 14b, das eine Röntgendetektionseinheit 16b und ein Modulgehäuse 46b aufweist, und eine Probenkammer 18b zu einer Aufnahme eines Untersuchungsobjekts 40a. Die Probenkammer 18b weist einen Verbindungsbereich 36b zu einer Verbindung mit einem korrespondierenden Verbindungsbereich 32b an dem Modulgehäuse 46b des Detektionsmoduls 14b und einen Verbindungsbereich 38b zu einer Verbindung mit einem korrespondierenden Verbindungsbereich 34b an dem Modulgehäuse 44b des Strahlungsmoduls 12b auf. Die Probenkammer 18b ist zwischen dem Detektionsmodul 14b und dem Strahlungsmodul 12b angeordnet. Eine als O-Ring-Dichtung ausgebildete Dichtungseinheit 30b dichtet eine Verbindung des Strahlungsmoduls 12b mit der Probenkammer 18b ab. Eine Gesamtlänge der Röntgenvorrichtung 10a beträgt 687 mm und ein Gesamtgewicht 43 kg beträgt. In der Probenkammer 18b können Untersuchungsobjekte 40b mit einem Maximaldurchmesser von 175 mm und einer Maximallänge von 95 mm mittels Arretierungsmitteln montiert werden, die durch eine verschließbare Öffnung an der Probenkammer 18b eingeführt werden.

In einem Röntgenuntersuchungsverfahren mit der Röntgenvorrichtung 10b wird die Röntgenvorrichtung 10b zu einer Objektuntersuchung von zumindest einem ersten Untersuchungsobjekt 40b in einen ersten Untersuchungsbereich transportiert und zu einer Objektuntersuchung von zumindest einem zweiten Untersuchungsobjekt in einen zweiten Untersuchungsbereich transportiert.

Um eine Untersuchung von Objekten zu ermöglichen, die für eine Aufnahme in der Probenkammer 18b zu groß sind, kann die Probenkammer 18b von dem Strahlungsmodul 12b und dem Detektionsmodul 14b abmontiert werden (Fig. 3). In einem Röntgenuntersuchungsverfahren zu einer Untersuchung eines solchen Untersuchungsobjekts 42b wird das Strahlungsmodul 12b der Röntgenvorrichtung 10b zur Untersuchung eines Untersuchungsobjekts 42b an oder unmittelbar vor einem Teilbereich des Untersuchungsobjekts 42b und das Detektionsmodul 14b an oder unmittelbar vor einem weiteren Teilbereich des Untersuchungsobjekts 42b angeordnet. Ein durch ein Aluminiumfenster 52b austretender Röntgenstrahl 48b wird nach Durchgang durch das Untersuchungsobjekt 42b mittels der Röntgendetektionseinheit 16b des Detektionsmoduls 14b, die dem Strahlungsmodul 12b gegenüberliegend angeordnet ist, detektiert.

### Bezugszeichen

- 10: Röntgenvorrichtung
- 12: Strahlungsmodul
- 14: Detektionsmodul
- 16: Röntgendetektionseinheit
- 18: Probenkammer
- 20: Röntgenstrahlungseinheit
- 22: Hochspannungsversorgungseinheit
- 24: Fokussierungseinheit
- 26: Stromversorgungseinheit
- 28: Turbomolekularpumpe
- 30: Dichtungseinheit
- 32: Verbindungsbereich
- 34: Verbindungsbereich
- 36: Verbindungsbereich
- 38: Verbindungsbereich
- 40: Untersuchungsobjekt
- 42: Untersuchungsobjekt
- 44: Modulgehäuse
- 46: Modulgehäuse
- 48: Röntgenstrahl
- 50: Röntgenanode
- 52: Aluminiumfenster
- 54: Elektronenstrahl

## Patentansprüche

1. Röntgenvorrichtung mit zumindest einer Hochspannungsversorgungseinheit (22a-b), zumindest einer Röntgenstrahlungseinheit (20a-b) zur Erzeugung eines Röntgenstrahls (48a-b), zumindest einer Fokussierungseinheit (24a-b) zu einer Fokussierung des Röntgenstrahls (48a-b), mit zumindest einer Röntgendetektionseinheit (16a-b), mit einem personentransportablen Detektionsmodul (14a-b), das die zumindest eine Röntgendetektionseinheit (16a-b) aufweist, und mit einem personentransportablen Strahlungsmodul (12a-b), das die zumindest eine Hochspannungsversorgungseinheit (22a-b) zusammen mit der zumindest einen Röntgenstrahlungseinheit (20a-b) und der zumindest einen Fokussierungseinheit (24a-b) umfasst, mit zumindest einer Probenkammer (18a-b) zu einer Aufnahme eines Untersuchungsobjekts (40a-b), die zumindest einen Verbindungsbereich (36a-b, 38a-b) aufweist, der zu einer Verbindung mit dem Strahlungsmodul (12a-b) und/oder dem Detektionsmodul (14a-b) vorgesehen ist, wobei das personentransportable Detektionsmodul (14a-b) zumindest einen Verbindungsbereich (32a-b) aufweist, der zu einer Verbindung mit dem Strahlungsmodul (12a-b) und/oder der Probenkammer (18ab) vorgesehen ist, wobei in zumindest einem Betriebszustand das personentransportable Detektionsmodul (14a-b) von der Probenkammer (18a-b) und/oder dem personentransportablen Strahlungsmodul (12a-b) abgetrennt werden kann, um zumindest ein Untersuchungsobjekt (42b) in einem Zwischenraum zwischen dem personentransportablen Strahlungsmodul (12a-b) und dem personentransportablen Detektionsmodul (14a-b) zu durchstrahlen.

2. Röntgenvorrichtung nach Anspruch 1, **dadurch gekennzeichnet, dass** das Strahlungsmodul (12a-b) einen Rauminhalt von maximal 0,032 m³ aufweist.

3. Röntgenvorrichtung nach Anspruch 1 oder 2, **dadurch gekennzeichnet, dass** das Strahlungsmodul (12a-b) ein Gewicht von maximal 50 kg aufweist.

4. Röntgenvorrichtung zumindest nach Anspruch 1, **gekennzeichnet durch** zumindest eine Dichtungseinheit (30a-b), die dazu vorgesehen ist, eine Verbindung zwischen dem Strahlungsmodul (12a-b) und/oder dem Detektionsmodul (14a-b) und/oder der Probenkammer (18a-b) abzudichten.

5. Röntgenuntersuchungsverfahren mit einer Röntgenvorrichtung (10a-b) zumindest nach Anspruch 1, **dadurch gekennzeichnet, dass** die Röntgenvorrichtung (10a-b) zu einer Objektuntersuchung von zumindest einem ersten Untersuchungsobjekt (40a-b, 42b) in einen ersten Untersuchungsbereich transportiert und zu einer Objektuntersuchung von zumindest einem zweiten Untersuchungsobjekt in einen zweiten Untersuchungsbereich transportiert wird.

6. Röntgenuntersuchungsverfahren nach Anspruch 5, **dadurch gekennzeichnet, dass** das Strahlungsmodul (12b) der Röntgenvorrichtung (10b) zu einer Untersuchung eines Untersuchungsobjekts (42b) an oder unmittelbar vor einem Teilbereich des Untersuchungsobjekts (42b) und das Detektionsmodul (14b) an oder unmittelbar vor einem weiteren Teilbereich des Untersuchungsobjekts (42b) angeordnet werden.

## Claims

1. X-ray device with at least one high-voltage supply unit (22a-b), with at least one x-ray radiation unit (20a-b) for generating an x-ray (48a-b), with at least one focusing unit (24a-b) for focusing the x-ray (48a-b), with at least one x-ray detection unit (16a-b), with a portable detection module (14a-b) comprising the at least one x-ray detection unit (16a-b), and with a portable radiation module (12a-b) comprising the at least one high-voltage supply unit (22a-b) together with the at least one x-ray radiation unit (20a-b) and the at least one focusing unit (24a-b), with at least one sample chamber (18a-b) for accommodating an examination object (40a-b), the sample chamber (18a-b) comprising at least one connection region (36a-b, 38a-b) which is configured for a connection with the radiation module (12a-b) and/or the detection module (14a-b), wherein the portable detection module (14a-b) comprises at least one connection region (32a-b) which is configured for a connection to the radiation module (12a-b) and/or to the sample chamber (18a-b),
wherein, in at least one operating state, the portable detection module (14a-b) is separable from the sample chamber (18a-b) and/or from the portable radiation module (12a-b) for the purpose of penetrating by radiation an examination object (42b) in an intermediate space between the portable radiation module (12a-b) and the portable detection module (14a-b).

2. X-ray device according to claim 1, **characterised in that** the radiation module (12a-b) features a volume of 0.032 m³ maximally.

3. X-ray device according to claim 1 or 2, **characterised in that** the radiation module (12a-b) features a weight of 50 kg maximally.

4. X-ray device at least according to claim 1, **characterised by** at least one sealing unit (30a-b), which is configured to seal a connection between the radiation module (12a-b) and/or the detection module (14a-b) and/or the sample chamber (18a-b).

5. X-ray examination method with an x-ray device (10a-b) at least according to claim 1, **characterised in that**, for an examination of at least one first examination object (40a-b, 42b), the x-ray device (10a-b) is transported into a first examination region and, for an examination of at least one second examination object, the x-ray device (10a-b) is transported into a second examination region.

6. X-ray examination method according to claim 5, **characterised in that**, for an examination of an examination object (42b), the radiation module (12b) of the x-ray device (10b) is arranged on or directly in front of a partial region of the examination object (42b), and the detection module (14b) is arranged on or directly in front of a further partial region of the examination object (42b).

## Revendications

1. Dispositif à rayons X avec au moins une unité d'alimentation électrique à haute tension (22a-b), avec au moins une unité à rayons X (20a-b) pour générer un rayon X (48a-b), avec au moins une unité de focalisation (24a-b) pour une focalisation du rayon X (48a-b), avec au moins une unité de détection à radiographie (16a-b), avec un module à détection portatif (14a-b) comprenant l'au moins une unité de détection à radiographie (16a-b), et avec un module de rayonnement portatif (12a-b) comprenant l'au moins une unité d'alimentation électrique à haute tension (22a-b) aussi que l'au moins une unité à rayons X (20a-b) et l'au moins une unité de focalisation (24a-b), avec au moins une chambre à échantillon (18a-b) pour recevoir un objet d'examen (40a-b), laquelle comporte au moins une région de raccordement (36a-b, 38a-b) prévue pour un raccordement avec le module de rayonnement (12a-b) et/ou avec le module à détection (14a-b),
le module à détection portatif (14a-b) comportant au moins une région de raccordement (32a-b) prévue pour un raccordement au module de rayonnement (12a-b) et/ou avec la chambre à échantillon (18a-b),
le module à détection portatif (14a-b) étant séparable, dans au moins un état opératif, de la chambre à échantillon (18a-b) et/ou du module de rayonnement portatif (12a-b) pour le bût de rayonner à travers d'au moins un objet d'examen (42b) dans un espace intermédiaire entre le module de rayonnement portatif (12a-b) et le module à détection portatif (14a-b).

2. Dispositif à rayons X selon la revendication 1, **caractérisé en ce que** le module de rayonnement (12a-b) a un volume de 0,032 m³ au maximum.

3. Dispositif à rayons X selon la revendication 1 ou 2, **caractérisé en ce que** le module de rayonnement (12a-b) a un poids de 50 kg au maximum.

4. Dispositif à rayons X au moins selon la revendication 1, **caractérisé par** au moins une unité à scellage (30a-b), laquelle est prévue à sceller un raccordement entre le module de rayonnement (12a-b) et/ou le module à détection (14a-b) et/ou la chambre à échantillon (18a-b).

5. Procédé d'examen à rayons X, avec un dispositif à rayons X (10a-b) au moins selon la revendication 1, **caractérisé en ce que**, pour un examen d'au moins un premier objet d'examen (40a-b, 42b), le dispositif à rayons X (10a-b) est transporté dans une première zone d'examen et, pour un examen d'au moins un deuxième objet d'examen, le dispositif à rayons X (10a-b) est transporté dans une deuxième zone d'examen.

6. Procédé d'examen à rayons X selon la revendication 5, **caractérisé en ce que**, pour un examen d'un objet d'examen (42b), le module de rayonnement (12b) du dispositif à rayons X (10b) est disposé à ou directement avant une région partielle de l'objet d'examen (42b) et le module à détection (14b) est disposé à ou directement avant une autre région partielle de l'objet d'examen (42b).
